# EUROPEAN PATENT APPLICATION

(11) **EP 4 092 651 A1**
(43) Date of publication of application: **23.11.2022**
(21) Application number: 20914424.5
(22) Date of filing: 02.10.2020
(51) Int. Cl.: G08G 1/16

(54) **NEARBY VEHICLE POSITION ESTIMATION SYSTEM, AND NEARBY VEHICLE POSITION ESTIMATION PROGRAM**

(30) Priority: 17.01.2020 JP 2020005646
(71) Applicant: AISIN CORPORATION, Kariya-shi, Aichi 448-8650 (JP)
(72) Inventor: MORIBE Isao, Kariya, Aichi 448-8650, (JP); MICHIDA Toshifumi, Kariya, Aichi 448-8650, (JP); HIROTA Tomoaki, Kariya, Aichi 448-8650, (JP); TOBUCHI Ryosuke, Kariya, Aichi 448-8650, (JP)
(74) Representative: Cabinet Beau de Loménie
(86) International application number: PCT/JP2020/037491
(87) International publication number: WO 2021/145032

(57) **Abstract**

There is provided a technique for improving the accuracy of estimation of a position of a nearby vehicle. A nearby vehicle position estimation system is formed that includes a relative position information obtaining part that obtains relative direction of a nearby vehicle with respect to a host vehicle, the nearby vehicle being present around the host vehicle; a map information obtaining part that obtains map information around a current position of the host vehicle; and a nearby vehicle position estimating part that obtains, based on the map information, a nearby road that overlaps a straight line extending in the relative direction from the host vehicle, and estimates that the nearby vehicle is present on the nearby road.

## Description

### TECHNICAL FIELD

The present invention relates to a nearby vehicle position estimation system and a nearby vehicle position estimation program.

### BACKGROUND ART

Conventionally, it is known that to detect a nearby vehicle present around a host vehicle, a camera, radar, etc., installed in the host vehicle are used. Patent Literature 1 describes that the accuracy of detection is increased by determining in which lane a nearby vehicle is or whether the nearby vehicle is outside a lane, using both of image recognition results for images shot with CCD cameras and results of detection by radar.

### CITATIONS LIST

### PATENT LITERATURE

Patent Literature 1: JP H09-166452 A

### SUMMARY OF INVENTION

### TECHNICAL PROBLEMS

When there is a certain distance or more between the host vehicle and a nearby vehicle (e.g., 30 m or more), it is difficult for both of cameras and radar to detect a position of the nearby vehicle with high accuracy. Hence, even if both of cameras and radar are used, it can be difficult to post a position of the nearby vehicle with high accuracy.

The present invention is made in view of the above-described problem, and provides a technique for improving the accuracy of estimation of a position of a nearby vehicle.

### SOLUTIONS TO PROBLEMS

To provide the above-described technique, a nearby vehicle position estimation system includes: a relative position information obtaining part that obtains relative direction of a nearby vehicle with respect to a host vehicle, the nearby vehicle being present around the host vehicle; a map information obtaining part that obtains map information around a current position of the host vehicle; and a nearby vehicle position estimating part that obtains, based on the map information, a nearby road that overlaps a straight line extending in the relative direction from the host vehicle, and estimates that the nearby vehicle is present on the nearby road.

Furthermore, to provide the above-described technique, a nearby vehicle position estimation program causes a computer to function as: a relative position information obtaining part that obtains relative direction of a nearby vehicle with respect to a host vehicle, the nearby vehicle being present around the host vehicle; a map information obtaining part that obtains map information around a current position of the host vehicle; and a nearby vehicle position estimating part that obtains, based on the map information, a nearby road that overlaps a straight line extending in the relative direction from the host vehicle, and estimates that the nearby vehicle is present on the nearby road.

Namely, the nearby vehicle position estimation system and the nearby vehicle position estimation program estimate a nearby road on which a nearby vehicle is traveling, based on relative direction of the nearby vehicle and map information around a current position of the host vehicle. Hence, according to this configuration, compared with a configuration in which a position of a nearby vehicle is estimated based on relative direction of the nearby vehicle with respect to a current position of the host vehicle without performing position correction based on map information, even if the nearby vehicle is distanced by a certain distance or more from the host vehicle, the accuracy of estimation of a position of the nearby vehicle can be improved.

### BRIEF DESCRIPTION OF DRAWINGS

FIG. 1 is a block diagram showing a configuration of a nearby vehicle position estimation system.
FIG. 2A is a diagram showing an example of an image shot with a camera, and FIG. 2B is a schematic diagram showing roads ahead of a host vehicle and a position of a nearby vehicle.
FIG. 3 is a flowchart of a nearby vehicle position estimation process.

### DESCRIPTION OF EMBODIMENTS

Here, an embodiment of the present invention will be described in the following order:
(1) Configuration of a nearby vehicle position estimation system;
(2) Nearby vehicle position estimation process; and
(3) Other embodiments.

### (1) Configuration of a nearby vehicle position estimation system:

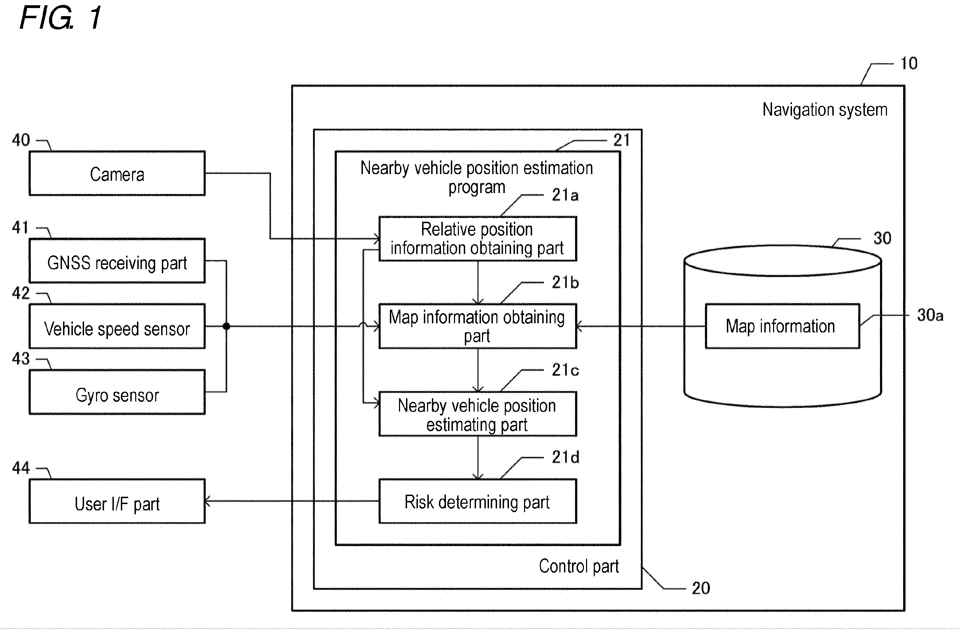

FIG. 1 is a block diagram showing a configuration of a navigation system 10 including a nearby vehicle position estimation system according to one embodiment of the present invention. The navigation system 10 is provided in a vehicle, and includes a control part 20 including a CPU, a RAM, a ROM, etc., and a recording medium 30. The navigation system 10 can execute, by the control part 20, programs stored in the recording medium 30 or the ROM. Map information 30a is recorded in advance in the recording medium 30.

The map information 30a is information used, for example, to identify the positions of intersections or provide route guidance, and includes, for example, node data representing the position, etc., of a node set on a road on which the vehicle travels, shape interpolation point data representing the position, etc., of a shape interpolation point for identifying the shape of a road between nodes, link data representing a link between nodes, and ground object data representing the position, shape, etc., of a ground object present on a road or around the road. Note that in the present embodiment, the nodes represent intersections. In addition, link data is associated with information indicating the number of lanes present on a road section represented by the link data, and the width of a lane. In the present embodiment, positions indicated by nodes and shape interpolation points indicate a position of a center line on a road section, and the positions of lanes and an area in which the lanes are present can be identified by the position, the number of the lanes, and the width of a lane.

The vehicle provided with the navigation system 10 is hereinafter referred to as host vehicle. The host vehicle of the present embodiment includes a camera 40, a GNSS receiving part 41, a vehicle speed sensor 42, a gyro sensor 43, and a user I/F part 44. The GNSS receiving part 41 is a device that receives Global Navigation Satellite System signals, and receives radio waves from navigation satellites and outputs a signal for calculating a current position of the host vehicle through an interface which is not shown. The control part 20 obtains the signal, thereby obtaining a current position (latitude, longitude, etc.) of the host vehicle in a map coordinate system. The vehicle speed sensor 42 outputs a signal corresponding to the rotational speed of wheels provided on the host vehicle. The control part 20 obtains the signal through an interface which is not shown, thereby obtaining vehicle speed. The gyro sensor 43 detects angular acceleration of the host vehicle for a turn in a horizontal plane, and outputs a signal corresponding to the direction of the host vehicle. The control part 20 obtains the signal, thereby obtaining a traveling direction of the host vehicle. The vehicle speed sensor 42, the gyro sensor 43, and the like, are used to identify a travel path of the host vehicle, and in the present embodiment, a current position is identified based on the point of departure and travel path of the host vehicle, and the current position of the host vehicle identified based on the point of departure and the travel path is corrected based on the output signal from the GNSS receiving part 41.

The camera 40 is a device that is oriented toward the front of the host vehicle and that obtains an image in a field of view. An optical axis of the camera 40 is fixed relative to the host vehicle, and a direction of the optical axis is known by the navigation system 10. In the present embodiment, the camera 40 is mounted on the host vehicle in a posture in which a vehicle width direction of the host vehicle is perpendicular to optical axis center and an area ahead in a traveling direction of the host vehicle is installed in the field of view. The control part 20 obtains an image outputted from the camera 40 and analyzes the image by extraction of features, etc., by which another vehicle (nearby vehicle) present around the host vehicle can be detected.

The user I/F part 44 is an interface part for accepting, as input, instructions from a user and providing various types of information to the user, and includes a touch panel type display, a speaker, etc., which are not shown. Namely, the user I/F part 44 includes an output part for images and audio; and an input part for instructions from the user.

By a function of a navigation program which is not shown, the control part 20 accepts user's input of a destination through the input part of the user I/F part 44 which is not shown, and searches for a planned travel route from a current position of the host vehicle to the destination, based on the map information 30a. In addition, by the function of the navigation program, the control part 20 controls the user I/F part 44 to provide guidance for traveling along the planned travel route. In the present embodiment, as an additional function of the navigation program, it is possible to estimate a position of a nearby vehicle present around the host vehicle, and provide guidance based on a result of determination for the risk of collision with the host vehicle, and the guidance is implemented by a nearby vehicle position estimation program 21. Note that the nearby vehicle position estimation program 21 may be executable regardless of whether or not guidance on a planned travel route is being provided.

To implement the guidance, the nearby vehicle position estimation program 21 includes a relative position information obtaining part 21a, a map information obtaining part 21b, a nearby vehicle position estimating part 21c, and a risk determining part 21d. The relative position information obtaining part 21a is a program module that allows the control part 20 to perform a function of obtaining relative direction of a nearby vehicle present around the host vehicle, with respect to the host vehicle, and a straight-line distance between the host vehicle and the nearby vehicle. In the present embodiment, the control part 20 obtains relative position information of the nearby vehicle with respect to the host vehicle, based on an image shot with one camera 40 (monocular camera). Thus, compared with a configuration in which a plurality of sensors are used together, cost can be suppressed.

The control part 20 obtains images that are continuously shot with the camera 40, and performs lens distortion correction, etc. The control part 20 determines whether an image includes features of a vehicle (e.g., a truck, a passenger car, or a motorcycle), by performing, for example, an image recognition process that uses You Only Look Once (YOLO), pattern matching, etc., and detects an image of a nearby vehicle present around the host vehicle.

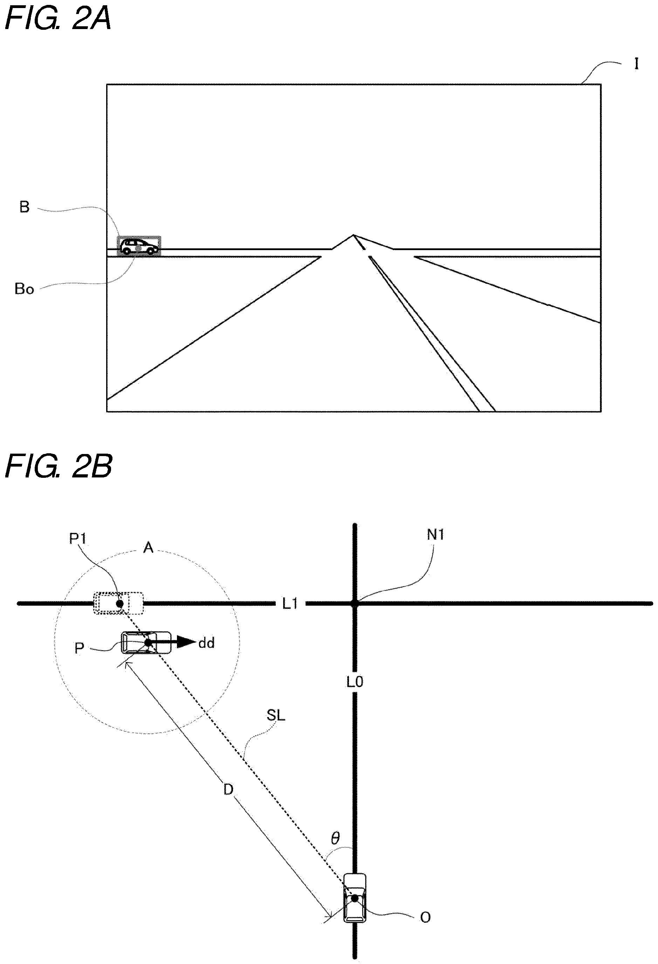

FIG. 2A is a diagram showing an example of an image I that is shot with the camera 40 and that has been subjected to distortion correction. In the drawing, a bounding box B is a rectangular region that encloses a nearby vehicle detected in the image I, and indicates the size of an image showing the nearby vehicle and the position of the nearby vehicle in the image I. The size and position of the bounding box B are represented by, for example, the coordinates of an upper left vertex and the coordinates of a lower right vertex of the bounding box B. The control part 20 obtains a height h (the number of pixels) of the bounding box B and representative coordinates Bo (x, y) of the bounding box B from the coordinates of the two diagonal vertices of the bounding box B. The representative coordinates Bo may be, for example, the center coordinates of the bounding box B (the midpoint in a width direction and a height direction).

Each set of coordinates in the image I is associated with the relative direction of an object shot at the set of coordinates with respect to the host vehicle, and information indicating a correspondence is stored in the recording medium 30. Based on the correspondence, the control part 20 obtains relative direction of a nearby vehicle shot at the representative coordinates Bo with respect to the host vehicle. In the present embodiment, a vehicle coordinate system with respect to the host vehicle is defined. The vehicle coordinate system is a three-dimensional coordinate system defined by a vehicle width axis, a vehicle length axis, and a vehicle height axis which are orthogonal to each other. FIG. 2B shows a plane including the vehicle width axis and the vehicle length axis. In the drawing, the point O is the origin of the host vehicle in the vehicle coordinate system. In an example of FIG. 2B, the vehicle length axis is parallel to a link L0 indicating a host vehicle's travel road. Relative direction is represented by, for example, an angle (θ) formed by a straight line SL that connects the origin O of the vehicle coordinate system to a point corresponding to the representative coordinates Bo, and the vehicle length axis in the plane including the vehicle width axis and the vehicle length axis (e.g., θ with a negative value indicates a left side of the vehicle length axis when traveling ahead in a traveling direction, and θ with a positive value indicates a right side).

In addition, the control part 20 identifies a type of the nearby vehicle in the bounding box by an image recognition process. The types of vehicle may be any type that indicates the size of a vehicle body, and may be classified into, for example, a truck, a passenger car, and a motorcycle. A representative vehicle height (e.g., 1.5 [m] in a case of a passenger car) is defined for each type of vehicle, and a straight-line distance between the host vehicle and the vehicle, and a height of the bounding box obtained when the vehicle is shot with the camera of the host vehicle are measured in advance. Information indicating a correspondence between the height of the bounding box and the straight-line distance with respect to the origin of the vehicle coordinate system is stored in the recording medium 30 for each type of vehicle. For example, when the height of the bounding box that encloses a passenger car whose representative actual measurement of vehicle height is 1.5 [m] is an h1 pixel, the h1 pixel is associated with the straight-line distance "D1 [m]", and when the height is an h2 pixel, the h2 pixel is associated with the straight-line distance "D2 [m]". For other types such as a truck and a motorcycle, too, information indicating a correspondence is stored in the recording medium 30 for each type. Based on the correspondence, the control part 20 calculates a straight-line distance D (see FIG. 2B) associated with the height h of the bounding box B. In the above-described manner, based on an image shot with the camera 40, the control part 20 obtains relative direction θ of a nearby vehicle installed in the image, and a straight-line distance D between the nearby vehicle and the host vehicle.

The map information obtaining part 21b is a program module that allows the control part 20 to implement a function of obtaining map information around a current position of the host vehicle. The control part 20 obtains a current position of the host vehicle in a map coordinate system, based on output signals from the GNSS receiving part 41, the vehicle speed sensor 42, and the gyro sensor 43 and the map information 30a. The control part 20 further obtains map information around the current position of the host vehicle. As the map information around the current position of the host vehicle, the control part 20 obtains, for example, map information of a region corresponding to a region included in a field of view of the camera 40. As the region corresponding to a region included in a field of view of the camera 40, the control part 20 may obtain, for example, map information of a fan-shaped region indicating an area with predetermined left and right angles with respect to the vehicle length axis of the host vehicle and with a predetermined radius. In addition, the control part 20 may obtain, for example, map information of a region in the shape of an isosceles trapezoid (in which the vehicle length axis of the host vehicle is orthogonal to two opposite sides, a short side out of the two opposite sides passes through the origin of the host vehicle, and the height has a predetermined value). In addition, the control part 20 may obtain, for example, map information of a region with a first distance ahead in a traveling direction of the host vehicle and with second distances on the left and right in a direction orthogonal to the traveling direction. The obtained map information includes road information (link data, shape interpolation point data, etc.) indicating the shapes and positions of roads included in the region.

The nearby vehicle position estimating part 21c is a program module that allows the control part 20 to implement a function of obtaining, based on the map information 30a, a nearby road that overlaps a straight line extending in relative direction from the host vehicle, and estimating that a nearby vehicle is present on the nearby road. In the present embodiment, by a function of the nearby vehicle position estimating part 21c, the control part 20 obtains a position P of a nearby vehicle in the map coordinate system (see FIG. 2B) based on the current position of the host vehicle, the straight-line distance D, and the relative direction θ. The control part 20 further identifies a road that satisfies the following three conditions, based on the map information 30a and estimates that the nearby vehicle is present on the road.

Condition 1 is that at least a part of the road is included in an area A with a preset value distance, with the position P of the nearby vehicle being at the center. The preset value may be assumed to be, for example, about 10 m. The control part 20 identifies a region occupied by the road on a map, by referring to the positions of nodes and shape interpolation points, the number of lanes, and the width of a lane. Namely, the control part 20 considers "the number of lanes × the width of a lane" as the width of the road. The control part 20 further identifies a center position of the road based on the nodes and shape interpolation points, and considers an area corresponding to the width of the road from the center position as a region occupied by the road on the map. When the region occupied by the road on the map is included in the area A, the control part 20 identifies the road as a road present in the area A. Needless to say, this process is an example, and for example, a road whose center position identified based on nodes and shape interpolation points is included in the area A may be identified.

Condition 2 is that the road intersects a host vehicle's travel road on which the host vehicle travels. The control part 20 identifies a road that intersects a host vehicle's travel road (L0) at a location ahead in a traveling direction of the host vehicle's travel road from among roads that satisfy condition 1. Namely, based on the map information 30a, the control part 20 sequentially follows nodes present on a road that satisfies condition 1, in a direction toward a host vehicle's travel road side, and sequentially follows nodes present on the host vehicle's travel road, in a forward direction of the host vehicle. Then, when there is a matching node among the nodes on both sides, the control part 20 considers that the road is a road that intersects the host vehicle's travel road.

Condition 3 is that an angle formed by a traveling direction of the nearby vehicle and a direction in which the road extends is within a reference value. The control part 20 calculates a traveling direction dd of the nearby vehicle (see FIG. 2B) based on time series changes in the position of the nearby vehicle. For example, first, the control part 20 calculates positions of the nearby vehicle based on images for the last several periods which are shot with the camera 40, and positions of the host vehicle obtained upon shooting the images for the several periods. Namely, the control part 20 identifies the position (the origin of the vehicle coordinate system) and posture (the direction of the vehicle length axis in the vehicle coordinate system) of the host vehicle in the map coordinate system that are obtained upon shooting an image with the camera 40. The control part 20 further obtains a position that is distanced by a straight-line distance D from the origin of the vehicle coordinate system and that is on a line in a direction inclined at relative direction θ with respect to the vehicle length axis, as a position of another vehicle in the map coordinate system. The control part 20 further calculates a traveling direction in the map coordinate system, based on a direction that connects two adjacent positions among the positions of another vehicle obtained based on the images which are continuously shot with the camera 40. Then, the control part 20 calculates a statistical value of the traveling direction as a traveling direction dd of the nearby vehicle. In addition, the control part 20 calculates a direction in which a road that satisfies condition 1 and condition 2 extends. Note that the "direction" can be defined by, for example, an inclined angle with respect to a reference (e.g., a specific coordinate axis or a traveling direction of the host vehicle) in the map coordinate system (the same also applies hereinafter).

The control part 20 calculates a direction in which a road in the area A and near the area A that satisfies conditions 1 and 2 extends, from a shape represented by the nodes and shape interpolation points of the road. For example, in the example of FIG. 2B, a link L1 satisfies condition 1 and condition 2, and thus, the control part 20 obtains the positions of both end points of the link L1 as information indicating the shape of the link L1 in the area A and near the area A. The control part 20 calculates a direction in which the link L1 extends, from the positions of both end points. Then, the control part 20 determines whether an angle (acute angle side) formed by the traveling direction dd of the nearby vehicle and the direction in which the link L1 extends is within a reference value. The reference value is a threshold value for determining whether the two directions are substantially parallel to each other. The control part 20 estimates that the nearby vehicle is present on a nearby road that satisfies conditions 1, 2, and 3. Note that when there are a plurality of roads that satisfy conditions 1, 2, and 3, the control part 20 estimates a road present closest to the position P of the nearby vehicle, as a nearby road on which the nearby vehicle is present.

The control part 20 further calculates a position of an intersection point of the nearby road estimated to have the nearby vehicle thereon and a straight line extending in the relative direction from the host vehicle. In a case of the example of FIG. 2B, the control part 20 calculates a position of an intersection point P1 of the nearby road (L1) and the straight line SL. Then, the control part 20 corrects the position of the nearby vehicle from P to P1. Namely, in the present embodiment, the control part 20 estimates that the nearby vehicle is present at an intersection point of a straight line extending in the relative direction from the host vehicle and a nearby road that satisfies conditions 1, 2, and 3, the intersection point being present on the nearby road.

The risk determining part 21d is a program module that allows the control part 20 to implement a function of determining the risk of collision of the nearby vehicle with the host vehicle, based on a result of estimation made by the nearby vehicle position estimating part 21c. By a function of the risk determining part 21d, the control part 20 determines whether there is a risk of collision between the host vehicle and the nearby vehicle, based on the current position of the host vehicle, a speed at which the host vehicle travels on the host vehicle's travel road, the position of the intersection point of the straight line and the nearby road, and a speed at which the nearby vehicle travels on the nearby road. Namely, the control part 20 calculates a speed at which the host vehicle travels on the host vehicle's travel road (L0), based on time series changes in the current position of the host vehicle. In addition, the control part 20 calculates a speed at which the nearby vehicle travels on the nearby road (L1), based on time series changes in the corrected position (PI) of the nearby vehicle. Then, the control part 20 determines whether, when the nearby vehicle and the host vehicle maintain their speeds, the nearby vehicle and the host vehicle approach within a predetermined distance at an intersection (N1) between the nearby road (L1) and the host vehicle's travel road (L0). Namely, the control part 20 calculates time T taken for the host vehicle to reach the intersection (N1) when the host vehicle travels on the host vehicle's travel road (L0), maintaining the calculated speed. The control part 20 calculates a predicted point that the nearby vehicle reaches at the time T when the nearby vehicle travels on the nearby road (L1), maintaining the calculated speed. The control part 20 compares a distance between the intersection (N1) and the predicted point with a predetermined distance. In this manner, the control part 20 determines whether the nearby vehicle and the host vehicle approach within the predetermined distance.

In the present embodiment, the control part 20 provides guidance on a result of the determination on the user I/F part 44. For example, when the control part 20 has determined that the host vehicle and the nearby vehicle approach within the predetermined distance, the control part 20 allows the speaker to issue a warning sound.

As described above, in the present embodiment, a nearby road on which a nearby vehicle is traveling is estimated based on relative direction of the nearby vehicle and map information around a current position of the host vehicle. Hence, according to the present embodiment, compared with a configuration in which a position of a nearby vehicle is estimated based on a relative position of the nearby vehicle with respect to a current position of the host vehicle without performing position correction based on map information, even if the nearby vehicle is distanced by a certain distance or more from the host vehicle, the accuracy of estimation of the position of the nearby vehicle can be improved. Thus, according to the present embodiment, the accuracy of determination of the risk of collision of the nearby vehicle with the host vehicle can be improved.

### (2) Nearby vehicle position estimation process:

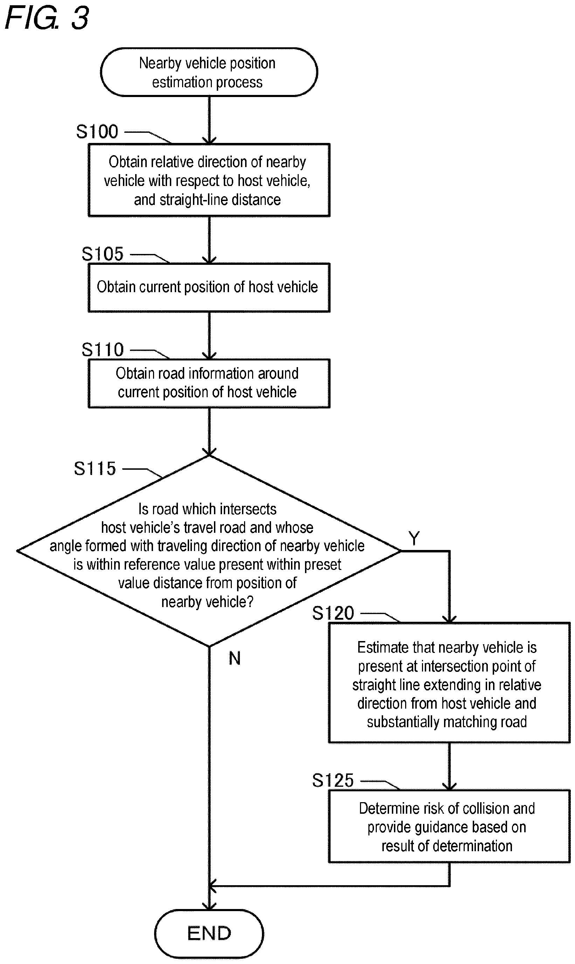

Next, a nearby vehicle position estimation process performed by the control part 20 will be described with reference to FIG. 3. The control part 20 performs an image recognition process, targeting a shot image, every shooting period of the camera 40. When the shot image includes an image representing features of a vehicle, the control part 20 obtains the coordinates of two diagonal vertices of a bounding box that encloses the image of the vehicle (nearby vehicle). In addition, a type of the nearby vehicle in the bounding box is obtained. After performing these processes, the control part 20 performs a nearby vehicle position estimation process for each nearby vehicle included in an image I.

When the nearby vehicle position estimation process starts, by the function of the relative position information obtaining part 21a, the control part 20 obtains relative direction θ of the nearby vehicle with respect to the host vehicle, and a straight line-distance D (step S 100). Namely, the control part 20 calculates representative coordinates Bo from the coordinates of the two diagonal vertices of the bounding box B. Then, based on a correspondence between each set of coordinates in the image I and the relative direction with respect to the host vehicle, the control part 20 obtains relative direction of the nearby vehicle shot at the representative coordinates Bo of the bounding box B. In addition, the control part 20 calculates a height h of the bounding box B from the coordinates of the two diagonal vertices of the bounding box B. In addition, the control part 20 obtains a type of the vehicle in the bounding box B. Then, based on a correspondence between the number of pixels representing the height of a bounding box and a straight-line distance to a vehicle in the bounding box, which is provided based on the type of vehicle, the control part 20 calculates a straight-line distance D associated with the height h of the bounding box B.

Subsequently, by the function of the map information obtaining part 21b, the control part 20 obtains a current position of the host vehicle (step S 105), and obtains road information around the current position of the host vehicle (step S 110). Namely, the control part 20 obtains a current position of the host vehicle in a map coordinate system, based on output signals from the GNSS receiving part 41, the vehicle speed sensor 42, and the gyro sensor 43 and the map information. The control part 20 obtains map information around the current position of the host vehicle. The obtained map information includes road information indicating the shapes and positions of roads included in a field of view of the camera 40.

Subsequently, by the function of the nearby vehicle position estimating part 21c, the control part 20 determines whether a road which intersects a host vehicle's travel road (condition 2) and whose angle formed with a traveling direction of the nearby vehicle is within a reference value (condition 3) is present within a preset value distance from the position of the nearby vehicle (condition 1) (step S 115). First, the control part 20 calculates a position P of the nearby vehicle (see FIG. 2B) based on the current position of the host vehicle, the straight-line distance D, and the relative direction θ. Based on the calculated position P of the nearby vehicle, the control part 20 determines whether there is a road that satisfies condition 1, and if the road is present, then the control part 20 further determines whether the road is a road that satisfies conditions 2 and 3, based on the road information around the host vehicle.

If it is not determined at step S115 that there is a road that satisfies all conditions 1, 2, and 3, then the control part 20 ends the nearby vehicle position estimation process. If it is determined at step S115 that there is a road that satisfies all conditions 1, 2, and 3, then by the function of the nearby vehicle position estimating part 21c, the control part 20 estimates that the nearby vehicle is present at an intersection point of a straight line extending in the relative direction from the host vehicle and the road that satisfies the conditions at step S115 (step S120). Namely, the control part 20 identifies a road that satisfies all conditions 1, 2, and 3. The control part 20 further calculates an intersection point P1 of a straight line extending in the relative direction θ from the current position of the host vehicle and the road that satisfies conditions 1, 2, and 3. Then, the control part 20 estimates that the nearby vehicle is present at the intersection point P1, and corrects the position of the nearby vehicle from P to P1.

Subsequently, by the function of the risk determining part 21d, the control part 20 determines the risk of collision and provides guidance based on a result of the determination (step S 125). The control part 20 determines whether the host vehicle and the nearby vehicle approach within a predetermined distance, based on the current position of the host vehicle, a speed at which the host vehicle travels on the host vehicle's travel road, the position of the intersection point of the straight line and the nearby road, and a speed at which the nearby vehicle travels on the nearby road. If the control part 20 determines that the host vehicle and the nearby vehicle approach within a predetermined distance, then the control part 20 provides guidance on the fact that there is a risk of collision by, for example, allowing the speaker to issue a warning sound.

### (3) Other embodiments:

The above-described embodiment is an example for implementing the present invention, and various other embodiments can also be adopted. For example, the nearby vehicle position estimation system may be a device mounted on a vehicle, etc., or may be a device implemented by a portable terminal, or may be a system implemented by a plurality of devices (e.g., a client and a server, or a control part in a navigation device and a control part in a user I/F part).

At least one of the relative position information obtaining part 21a, the map information obtaining part 21b, the nearby vehicle position estimating part 21c, and the risk determining part 21d which are included in the nearby vehicle position estimation system may be present so as to be separated into a plurality of devices. Needless to say, some configurations of the above-described embodiment may be omitted, or the order of processes may be changed or omitted. For example, the risk determining part 21d may be omitted, and a corrected position of a nearby vehicle may be provided to a map display processing part.

The relative position information obtaining part may be configured in any manner as long as the relative position information obtaining part can obtain relative direction of a nearby vehicle present around the host vehicle, with respect to the host vehicle. The relative direction with respect to the host vehicle is an angle with respect to an axis that is defined by the host vehicle and that passes through the host vehicle. The relative direction of the nearby vehicle with respect to the host vehicle may be represented by, for example, an angle formed by a vehicle length axis in a plane including the vehicle length axis and a vehicle width axis in a vehicle coordinate system, or may be further represented by, in addition thereto, an angle formed by the vehicle length axis in a plane including the vehicle length axis and a vehicle height axis. The relative direction may be obtained from output from various sensors such as a camera and radar (including LiDAR) that shoot a region around the host vehicle. In addition, relative direction of not only a nearby vehicle ahead of the host vehicle, but also a nearby vehicle to the side of or behind the host vehicle may be obtained. In addition, obtaining of a relative position of a nearby vehicle from an image shot with the camera may be performed based on the size and position of a bounding box that encloses the nearby vehicle in the image, or may be performed by other methods. For example, the obtaining may be performed using a model that is machine trained to output a distance to a vehicle included in an inputted image, or relative direction of the vehicle.

The camera 40 (FIG. 1) may be replaced by a stereo camera or radar, or these sensors may be used in combination. For example, when millimeter-wave radar is used, the relative position information obtaining part 21a can obtain a straight-line distance to a nearby vehicle, based on a transmitted wave that is transmitted from the radar and a reflected wave that is reflected from an object. By providing a plurality of reception antennas and detecting a phase difference between the antennas, the relative position information obtaining part 21a can obtain relative direction of a nearby vehicle. In addition, for example, by adopting 3D-LiDAR, the relative position information obtaining part 21a can obtain a straight-line distance to a nearby vehicle and relative direction of the nearby vehicle. In addition, for example, a configuration may be adopted in which a straight-line distance to a nearby vehicle is obtained by the principle of triangulation from two images shot with a stereo camera. Of course, relative direction of the nearby vehicle may be obtained from the images shot with the stereo camera.

The map information obtaining part may be configured in any manner as long as the map information obtaining part can obtain map information around a current position of the host vehicle. As the map information around a current position of the host vehicle, road information (link data, shape interpolation point data, etc.) of a region corresponding to a detection area of a nearby vehicle obtained by the relative position information obtaining part is to be obtained. The region corresponding to a detection area may be defined by, for example, a distance from the host vehicle or may be determined by a distance and an angle. In addition, facility data such as the positions and shapes of facilities present in the detection area may be able to be obtained, and a configuration may be adopted in which a ground object (e.g., a structure, a sign, a parking lot, a pond, or a river) included in an image shot with the camera is identified based on ground object data, and a position of a vehicle is estimated from a relationship between the ground object and the vehicle. A position of a nearby vehicle to be estimated may be on any section on which the vehicle can travel, and may be on any section in which a node is set in map information. For example, when a node is set at a parking lot, a position of a nearby vehicle in the parking lot may be able to be detected.

The nearby vehicle position estimating part may be configured in any manner as long the nearby vehicle position estimating part can obtain, based on map information, a nearby road that overlaps a straight line extending in relative direction from the host vehicle, and estimate that a nearby vehicle is present on the nearby road. For example, when there is only one nearby road that overlaps a straight line extending in relative direction from the host vehicle, in a detection area of a nearby vehicle obtained by the relative position information obtaining part, it can be estimated that the nearby vehicle is present on the nearby road. Thus, the relative position information obtaining part is to be able to obtain at least relative direction. Specifically, for example, as in the example of FIG. 2B, when a host vehicle's travel road intersects one nearby road ahead in a traveling direction of the host vehicle, there are two points on the nearby road that are straight-line distances D from the host vehicle, and thus, a position of a nearby vehicle cannot be estimated based on the straight-line distances D and map information. However, in such a case, too, a nearby road on which a nearby vehicle is present can be estimated using relative direction θ and map information.

In addition, any configuration can be adopted as long as it can be estimated that a nearby vehicle is present on a nearby road, and a position in which the nearby vehicle is present may be on an extension line that extends in relative direction from the host vehicle or may not be on the extension line. For example, it may be estimated that the nearby vehicle is present at an intersection point of a perpendicular drawn from a relative position of the nearby vehicle with respect to the host vehicle to the nearby road, and the nearby road.

In addition, the nearby vehicle position estimating part may not adopt any of the above-described conditions 1, 2, and 3 (e.g., conditions 1 and 2 are adopted, or conditions 1 and 3 are adopted, or conditions 2 and 3 are adopted). Alternatively, the nearby vehicle position estimating part may adopt a condition other than the above-described conditions 1, 2, and 3. For example, a nearby road may be a road that intersects a host vehicle's travel road on which the host vehicle travels (condition 2) or may be a road that does not intersect the host vehicle's travel road. For example, a nearby road may be a road parallel to the host vehicle's travel road or may be a road that branches off from the host vehicle's travel road. Thus, a nearby vehicle may be a vehicle traveling parallel to the host vehicle, or may be a vehicle traveling ahead of the host vehicle, or may be a vehicle coming toward the host vehicle, or may be a vehicle approaching a course of the host vehicle, or may be a vehicle moving away from the course of the host vehicle.

When a configuration (condition 3) is adopted in which if an angle formed by a traveling direction of a nearby vehicle and a direction in which a nearby road extends is within a reference value, then it is estimated that the nearby vehicle is present on the nearby road, and when an angle formed by the traveling direction of the nearby vehicle and a direction in which a first nearby road extends exceeds a reference value, the nearby vehicle position estimating part may estimate that the nearby vehicle is not present on the first nearby road. When a second nearby road whose angle formed with the traveling direction of the nearby vehicle is within a reference value is present around the first nearby road, a road estimated to have the nearby vehicle thereon may be changed from the first nearby road to the second nearby road.

The risk determining part may be configured in any manner as long as the risk determining part can determine the risk of collision of a nearby vehicle with the host vehicle. For example, a determination as to whether a distance between an intersection (N1) and a predicted point is less than a third distance and a determination as to whether the distance is greater than or equal to the third distance and less than a fourth distance may be able to be made. A guidance mode may differ between when the former makes an affirmative determination and when the latter makes an affirmative determination. Note that for the guidance modes, various techniques can be adopted. For example, guidance may be provided to a driver by performing display on a head-up display. Note that a result of a determination made by the risk determining part may be provided to a vehicle control ECU that controls operation of the vehicle. As a result, operation of the vehicle may be controlled by the vehicle control ECU to avoid a collision.

Note that when, as shown in FIG. 2B, the nearby vehicle is traveling toward the intersection (N1) on a road that intersects the host vehicle's travel road, for courses that can be taken by the nearby vehicle and the host vehicle after arriving at the intersection (N1), there can be various patterns in addition to the nearby vehicle and the host vehicle each traveling straight ahead. For example, there can be a pattern in which the host vehicle travels straight ahead and the nearby vehicle makes a right turn, a pattern in which the host vehicle travels straight ahead and the nearby vehicle makes a left pattern, a pattern in which the host vehicle makes a right turn and the nearby vehicle travels straight ahead, and a pattern in which the host vehicle makes a right turn and the intersecting vehicle makes a right turn. The risk of collision may be determined for each of such patterns, and guidance or vehicle control based on a result of the determination may be performed.

Furthermore, a technique in which, as in the present invention, a nearby road that overlaps a straight line extending in relative direction from the host vehicle is obtained based on map information, it is estimated that a nearby vehicle is present on the nearby road, and the risk of collision of the nearby vehicle with the host vehicle is determined based on a result of the estimation is also applicable as a method or a program executed by a computer. In addition, a system, a program, and a method such as those described above may be implemented as a single device or may be implemented by using a component shared with each part included in a vehicle, and include various modes. In addition, changes can be made as appropriate, e.g., a part is software and a part is hardware. Furthermore, the invention is also feasible as a recording medium for a program that controls the system. Needless to say, the recording medium for a program may be a magnetic recording medium or may be a semiconductor memory, and any recording medium to be developed in the future can also be considered exactly in the same manner.

### REFERENCE SIGNS LIST

10: Navigation system, 20: Control part, 21: Nearby vehicle position estimation program, 21a: Relative position information obtaining part, 21b: Map information obtaining part, 21c: Nearby vehicle position estimating part, 21d: Risk determining part, 30: Recording medium, 30a: Map information, 40: Camera, 41: GNSS receiving part, 42: Vehicle speed sensor, 43: Gyro sensor, 44: User I/F part, A: Area, B: Bounding box, Bo: Representative coordinates, D: Straight-line distance, I: Image, P1: Intersection point, SL: Straight line, dd: Traveling direction of a nearby vehicle, and θ: Relative direction

## Claims

1. A nearby vehicle position estimation system comprising:
a relative position information obtaining part that obtains relative direction of a nearby vehicle with respect to a host vehicle, the nearby vehicle being present around the host vehicle;
a map information obtaining part that obtains map information around a current position of the host vehicle; and
a nearby vehicle position estimating part that obtains, based on the map information, a nearby road that overlaps a straight line extending in the relative direction from the host vehicle, and estimates that the nearby vehicle is present on the nearby road.

2. The nearby vehicle position estimation system according to claim 1, wherein
the relative position information obtaining part obtains a straight-line distance between the host vehicle and the nearby vehicle, and
the nearby vehicle position estimating part
obtains a position of the nearby vehicle based on the current position of the host vehicle, the straight-line distance, and the relative direction,
obtains a distance between the position of the nearby vehicle and the nearby road, based on the map information, and
estimates that the nearby vehicle is present on the nearby road, when the distance is within a specified value.

3. The nearby vehicle position estimation system according to claim 1 or 2, wherein the relative position information obtaining part obtains relative position information of the nearby vehicle with respect to the host vehicle, based on an image shot with one camera installed in the host vehicle.

4. The nearby vehicle position estimation system according to claim 1 or 2, wherein the relative position information obtaining part obtains relative position information of the nearby vehicle, using at least one of a stereo camera, a camera, and radar.

5. The nearby vehicle position estimation system according to any one of claims 1 to 4, wherein the nearby vehicle position estimating part estimates that the nearby vehicle is present on the nearby road, when an angle formed by a traveling direction of the nearby vehicle and a direction in which the nearby road extends is within a reference value.

6. A nearby vehicle position estimation program that causes a computer to function as:
a relative position information obtaining part that obtains relative direction of a nearby vehicle with respect to a host vehicle, the nearby vehicle being present around the host vehicle;
a map information obtaining part that obtains map information around a current position of the host vehicle; and
a nearby vehicle position estimating part that obtains, based on the map information, a nearby road that overlaps a straight line extending in the relative direction from the host vehicle, and estimates that the nearby vehicle is present on the nearby road.
